# EUROPÄISCHE PATENTSCHRIFT

(11) **EP 1 557 305 B1**
(45) Veröffentlichungstag und Bekanntmachung des Hinweises auf die Patenterteilung: **10.03.2010**
(21) Anmeldenummer: 05001031.3
(22) Anmeldetag: 19.01.2005
(51) Int. Cl.: B60G 17/052, B60G 17/033, B60G 17/015, B60G 21/067, B62D 13/00, B62D 53/00

(54) **Fahrzeuganhänger**
Vehicle trailer
Remorque de véhicule

(30) Priorität: 20.01.2004 DE 102004003023
(43) Veröffentlichungstag der Anmeldung: 27.07.2005
(73) Patentinhaber: Crossmobil GmbH, 77656 Offenburg (DE)
(72) Erfinder: Pfaff, Bertold, 79183 Waldkirch-Siensbach (DE)
(74) Vertreter: Huwer, Andreas

(56) Entgegenhaltungen:
- EP-A- 0 481 199
- EP-A- 1 318 066
- DE-A1- 1 580 044
- DE-A1- 2 948 181
- DE-A1- 3 008 875
- DE-A1- 4 402 182
- DE-A1- 4 441 307
- DE-A1- 19 718 258
- DE-A1- 19 801 546
- FR-A- 2 655 604
- GB-A- 2 223 463
- GB-A- 2 235 423
- US-A- 2 862 727
- US-A- 2 903 272
- US-A- 3 049 361
- US-A- 3 716 249
- PATENT ABSTRACTS OF JAPAN Bd. 2002, Nr. 11, 6. November 2002 (2002-11-06) & JP 2002 205524 A (SHOWA AIRCRAFT IND CO LTD), 23. Juli 2002 (2002-07-23)

## Beschreibung

Die Erfindung betrifft einen Fahrzeuganhänger nach dem Oberbegriff von Anspruch 1.

Ein derartiger Fahrzeuganhänger für einen LKW ist aus GB-A-2 223 463 bekannt. Der Anhänger hat zwei als Tandemachse angeordnete Pendelachsen, bei denen die Räder jeweils über Luftfedern ein- und ausfederbar mit einem Fahrgestell verbunden sind. Mit dem vorderen Ende des Fahrgestells ist eine Zugdeichsel fest verbunden, die eine Anhängeöse zum Verbinden mit einer Zugmaschine aufweist Die Luftfedern sind über Druckluftleitungen an einer Druckluftversorgung angeschlossen. Eine erste Druckluftleitung verläuft von der Druckluftversorgung zu einem Niveauregulierungsventil. Von dort führen zwei zweite Druckluftleitungen zu den Luftfedern an der linken bzw. rechten Fahrzeugseite. In dem Leitungsabschnitt, der zu den Luftfedern der Hinterachsräder führt, ist jeweils ein Durchflussmengenbegrenzer angeordnet. Durch diese Maßnahme soll beim Bremsen einem Eintauchen des vorderen Teils des Anhängers entgegengewirkt werden, indem der Luftdruckausgleich zwischen den vorderen und hinteren Luftfedern verlangsamt wird. Für einen PKW wäre ein solcher Fahrzeuganhänger jedoch nur bedingt geeignet, weil die von der Zugdeichsel auf die Anhängekupplung übertragene Stützlast den zulässigen Stützlastbereich über- oder unterschreiten kann, wenn der Fahrzeuganhänger im vorderen und hinteren Bereich seiner Ladefläche unterschiedlich stark beladen ist. Außerdem ist das Fahrverhalten des Fahrzeuganhängers noch verbesserungswürdig.

Ein Fahrzeuganhänger mit einem Wohnwagenaufbau, der eine Länge von 7,84 m aufweist, ist im Handel unter der Bezeichnung Dethleffs Exclusiv 760 V erhältlich. Der Fahrzeuganhänger hat ein Fahrgestell, das fest mit einer Zugdeichsel verbunden ist, an der eine Kupplungsaufnahme zum Verbinden mit einer Anhängekupplung eines PKW angeordnet ist. An dem Fahrgestell ist eine Tandemachse mit einem Radstand von etwa einen Meter angeordnet. Die Tandemachse ist als Starrachse ausgebildet, die über Fahrwerksfedern ein- und ausfederbar mit dem Fahrgestell des Fahrzeuganhängers verbunden ist. Die Tandemachse ist derart relativ zu dem Aufbau angeordnet, dass sich an der Kupplungsaufnahme in unbeladenem Zustand des Fahrzeuganhängers eine vorgeschriebene Stützlast ergibt, wenn der Fahrzeuganhänger mit der Anhängekupplung des PKW verbunden ist. Nachteilig ist jedoch, dass die vorgeschriebene Stützlast unterschritten werden kann, wenn der Fahrzeuganhänger heckseitig stärker beladen wird als im vorderen Bereich. Auch kann es zu einem Überschreiten der zulässigen Stützlast kommen, wenn die Beladung des Anhängers im vorderen Bereich größer ist als im Heckbereich. Ungünstig ist außerdem, dass der Anhänger wegen des großen Überhangs des Wohnwagenaufbaus für Fahrten in unebenem Gelände praktisch nicht geeignet ist.

Aus DE 102 36 335 A1 ist auch bereits ein zweiachsiger Drehschemelanhänger bekannt, der einen Wohnwagenaufbau mit einer dahinter angeordneten Ladefläche aufweist. Der Radstand des Fahrzeuganhängers ist größer als die Länge des Aufbaus. Dies wird dadurch erreicht, dass die an dem Drehschemel angeordnete vordere Achse am vorderen Ende des Aufbaus und die hintere Achse hinter dem Aufbau im Bereich der Ladefläche vorgesehen ist. Durch diese Achsanordnung ist ein erheblicher Teil des Gewichts des Fahrzeuganhängers zwischen den Achsen angeordnet. Der Fahrzeuganhänger läuft daher ruhiger und spurtreuer hinter dem Zugfahrzeug, als ein Fahrzeuganhänger mit einer einzelnen mittleren Achse oder einer Tandemachse. Damit der Fahrzeuganhänger trotz des praktisch nicht vorhandenen vorderen Überhangs mit Zugfahrzeugen verbindbar ist, deren Anhängekupplung einen unterschiedlichen Abstand zum Erdboden aufweist, ist die Zugdeichsel um eine horizontale, rechtwinklig zur Längsrichtung des Fahrzeuganhängers verlaufende Achse verschwenkbar mit dem Drehschemel des Fahrzeuganhängers verbunden. Dadurch ergibt sich jedoch nur eine relativ geringe Stützlast an der Kupplungsaufnahme, da die Stützlast praktisch nur durch das Gewicht der Zugdeichsel aufgebracht wird. Da die vom Gesetzgeber vorgeschriebene Mindeststützlast bei PKW-Anhängekupplungen proportional mit dem Gewicht des Fahrzeuganhängers ansteigt, ermöglicht der Fahrzeuganhänger, wenn er von einem PKW gezogen wird, nur ein geringes Gesamtgewicht. Ungünstig ist außerdem, dass das Fahrwerk des Drehschemelanhängers keine Federung aufweist und daher für Fahrten im Gelände nur bedingt geeignet ist.

Es besteht deshalb die Aufgabe, einen Fahrzeuganhänger zu schaffen, der bei unterschiedlicher Beladung und/oder wenn er mit unterschiedlichen Zugfahrzeugen kombiniert wird auf einfache Weise die Einhaltung einer vorgegebenen Stützlast an der Anhängekupplung des Zugfahrzeugs ermöglicht. Außerdem soll der Fahrzeuganhänger ein stabiles Fahrverhalten und eine gute Geländegängigkeit aufweisen.

Diese Aufgabe wird mit den Merkmalen des Anspruchs 1 gelöst.

Das Verhältnis zwischen dem Luftdruck in der Luftfeder der vorderen und der Luftfeder der hinteren Achse kann dann durch Verstellen des Druckreduziervenfils auf einfache Weise an den jeweiligen Beladungszustand des Fahrzeuganhängers angepasst werden. Da für die linke und rechte Fahrzeugseite jeweils ein eigenes Druckreduzierventil vorhanden ist, bleibt das eingestellte Luftdruckverhältnis auch beim Durchfahren einer Kurve im Wesentlichen erhalten, wenn die kurvenäußeren Luftfedern ein- und die kurveninneren Luftfedern ausfedern. In vorteilhafter Weise ermöglicht der Fahrzeuganhänger durch den in den Luftfedern der einzelnen Achsen unterschiedlich einstellbaren Luftdruck auf einfache Weise eine Anpassung der Stützlast der Zugdeichsel an den jeweiligen Beladungszustand des Anhängers. So kann beispielsweise der Luftdruck in den Luftfedern der vorderen Achse im Verhältnis zu dem Luftdruck in den Luftfedern der hinteren Achse reduziert werden, wenn das Heck des Anhänger-Aufbaus stärker beladen ist als der vordere Teil des Aufbaus. Der Aufbau verkippt dann etwas nach vorne, so dass über die fest bzw. unverschwenkbar mit dem Fahrgestell verbundene Zugdeichsel eine höhere Stützlast auf die Anhängekupplung des Zugfahrzeugs übertragen wird. Dabei sind unabhängig von dem in den einzelnen Fahrwerksfedem jeweils eingestellten Luftdruck stets die Räder beider Achsen des Fahrzeuganhängers mit dem Erdboden in Kontakt, so dass die Last auf alle Räder des Fahrzeuganhängers verteilt wird. Durch entsprechendes Verstellen des Luftdrucks in den Luftfedern der einen Achse relativ zu dem Luftdruck in den Luftfedern der anderen Achse lässt sich außerdem die Höhe einer an am vorderen Ende der Zuggabel angeordneten Kupplungsaufnahme auf einfache Weise an die Höhe der Anhängekupplung eines Zugfahrzeugs anpassen. Der Anhänger kann dadurch problemlos mit Zugfahrzeugen kombiniert werden, deren Anhängekupplungen in unterschiedlichen Abständen zum Erdboden angeordnet sind. Die Luftfederung ermöglicht außerdem relativ große Federwege, weshalb der Fahrzeuganhänger auch eine gute Geländegängigkeit aufweist Der Schwerpunkt des Anhängers ist zwischen der hinteren Achse und einer an der Zugdeichsel vorgesehenen Kupplungsaufnahme angeordnet. Die Druckluftversorgung kann einen Druckluftvorratsbehälter aufweisen, der mit einer Druckluftquelle, wie z.B. einem Kompressor, einem Windkessel oder dergleichen verbunden ist. Die Druckluftquelle kann elektrisch oder mechanisch über die Räder des Fahrzeugs angetrieben sein. Es ist aber auch denkbar, dass die Druckluftquelle in dem Zugfahrzeug angeordnet und über eine Druckluftleitung mit dem Druckluftvorratsbehälter des Fahrzeuganhängers verbunden ist.

Aufgrund der Nachlauflenkung weist der Fahrzeuganhänger ein stabiles Fahrverhalten auf Die Nachlauflenkung ermöglicht darüber hinaus einen einfachen und kostengünstigen Aufbau des Fahrzeuganhängers. Da der Fahrzeuganhänger aufgrund eines bei einer Lenkbewegung des Zugfahrzeugs an seinen nachlaufgelenkten Rädern auftretenden, das Nachlenken der Räder bewirkenden Drehmoments selbständig der Lenkbewegung des Zugfahrzeugs folgt, kann der Fahrzeuganhänger über eine Standard-Anhängekupplung mit dem Zugfahrzeug verbunden werden. Eine zusätzliche, das Zugfahrzeug mit dem Fahrzeuganhänger verbindende Lenkstange, kann eingespart werden. Somit brauchen an dem Zugfahrzeug außer der Anhängekupplung keine weiteren, das Design des Zugfahrzeugs störenden Widerlagerstellen zum Verbinden mit dem Fahrzeuganhänger vorgesehen zu sein.

Vorteilhaft ist, wenn die Druckreduzierventile zwischen den Luftfedern der vorderen Achse und der Druckluftversorgung angeordnet sind. Dies ist vor allem bei Fahrzeuganhängem zweckmäßig, die im Heckbereich des Aufbaus einen Laderaum aufweisen, in dem beispielsweise ein Motorrad, ein Quad und/oder ein anderes schweres Gerät untergebracht werden kann. In diesem Fall kann der Luftdruck mit Hilfe der Druckreduzierventile in den Luftfedern der vorderen Achse entsprechend reduziert werden, so dass trotz der überwiegend heckseitigen Beladung des Fahrzeuganhängers an der Anhängekupplung des Zugfahrzeugs die gesetzlich vorgeschriebene Stützlast aufgebracht wird.

Bei einer bevorzugten Ausführungsform der Erfindung weist der Fahrzeuganhänger zur Niveauregulierung des Fahrgestells ein verstellbares Luftfederventil auf, das mit einem Eingangsanschluss mit der Druckluftversorgung und mit mindestens einem Ausgangsanschluss mit den Luftfedern der hinteren Achse und über die Druckreduziervenfile mit den Luftfedern der vorderen Achse verbunden ist. Mit Hilfe des Lufffederventils kann der Luftdruck in den Luftfedern bei starker Beladung des Fahrzeuganhängers insgesamt erhöht werden, so dass der Abstand zwischen dem Erdboden und dem Aufbau weitgehend unabhängig vom Beladungszustand des Fahrzeuganhängers ist. Dadurch wird einerseits eine noch gleichmäßigere Stützlast an der Anhängekupplung des Zugfahrzeugs ermöglicht und andererseits wird aber auch die Geländegängigkeit des Anhängers verbessert. Gegebenenfalls ist es sogar möglich, mit Hilfe des Luflfederventils den Abstand zwischen dem Erdboden und dem Aufbau an die Geschwindigkeit des Fahrzeuganhängers und/oder die jeweilige Geländestruktur anzupassen.

Vorteilhaft ist, wenn die Räder der Achsen über Einzelradaufhängungen mit dem Fahrgestell verbunden sind. Der Fahrzeuganhänger ist dann noch besser für einen off-road Betrieb geeignet.

Vorteilhaft ist, wenn der Fahrzeuganhänger eine Druckreduziereinrichtung zur Reduzierung des Luftdrucks in den Luftfedern der vorderen Achse bei Rückwärtsfahrt aufweist, und wenn die Druckreduziereinrichtung zum automatische Anpassen des Luftdrucks an die Vorwärts- und/oder Rückwärtsfahrtrichtung vorzugsweise ein mit einem Fahrtrichtungsgeber verbundenes Stellglied aufweist. Dadurch lässt sich der Fahrzeuganhänger bei Rückwärtsfahrt noch leichter rangieren. Der Fahrtrichtungsgeber kann ein am Zugfahrzeug vorgesehener Rückwärtsgangschalter sein, der bei den meisten Zugfahrzeugen zum Ein- und Ausschalten eines Rückfahrscheinwerfers serienmäßig verbaut ist. Beim Einlegen des Rückwärtsgangs wird dann die Reduzierung des Luftdrucks in den vorderen Luftfedern automatisch auslöst und beim Herausnehmen des Rückwärtsgangs wieder rückgängig gemacht.

Zweckmäßigerweise sind die Luftfedern der vorderen Achse jeweils über eine Reihenschaltung, bestehend aus dem ersten Druckreduzierventil und einem zweiten Druckreduzierventil mit der Druckluftversorgung verbunden, wobei das zweite Druckreduzierventil einen kleineren Ausgangsdruck aufweist als das erste Druckreduzierventil, und wobei die Druckreduziereinrichtung eine zu- und abschaltbare Überbrückungseinrichtung für das zweite Druckreduzierventil aufweist Die Druckreduziereinrichtung weist dann einen einfachen Aufbau auf

Vorteilhaft ist, wenn die nachlaufgelenkten Räder an Lenkschenkeln angeordnet sind, die um Radschwenkachsen verschwenkbar mit an einem Achsträger angelenkten Fahrwerkslenkern verbunden sind, wenn die Lenkschenkel durch mindestens eine Spurstange miteinander verbunden sind, und wenn eine pneumatische Lenkstabilisierungseinrichtung vorgesehen ist, die derart ausgebildet ist, dass sie die Räder beim Verschwenken aus der Geradeausstellung mit einem Rückstellmoment beaufschlagt. Dadurch kann vor allem beim Durchfahren von Kurven im beladenem Zustand des Fahrzeuganhängers ein noch ruhigerer Lauf des Fahrzeuganhängers erreicht werden.

Bei einer zweckmäßigen Ausgestaltung der Erfindung weist die Lenkstabilisierungseinrichtung für das linke und rechte Rad der vorderen Achse jeweils einen pneumatischen Zylinder, insbesondere einen Membranzylinder auf, der mit seinem einen Ende an dem dem Rad zugeordneten Fahrwerkslenker und mit seinem anderen Ende mit Abstand von der Radschwenkachse des Rads an dessen Lenkschenkel angreift. Dadurch ergibt sich ein kompakter und einfacher Aufbau des Fahrwerks, bei dem die Kräfte für die Stabilisierung der Lenkung direkt von dem pneumatischen Zylinder auf die Räder übertragen werden können.

Vorteilhaft ist, wenn die Zylinder für das linke und rechte Rad der vorderen Achse jeweils über das für die betreffende Anhängerseite vorgesehene Druckreduzierventil mit der Druckluftversorgung verbunden sind. Die von den Zylindern aufgebrachten Lenkstabitisierungskräfte passen sich dann an den jeweils in den Luftfedern der vorderen Achse herrschenden Luftdruck und somit an die jeweils eingestellte Lastverteilung zwischen der vorderen und hinteren Achse automatisch an. Dabei werden die Lenkstabilisierungskräfte bei einer Zunahme des Luftdrucks in der vorderen Achse und somit einer Zunahme der Achslast dieser Achse erhöht und bei einer Abnahme des Luftdrucks reduziert.

Bei einer bevorzugten Ausführungsform der Erfindung ist für die linke und rechte Anhängerseite zusätzlich zu dem ersten Druckreduzierventil mindestens ein weiteres, zur Erzeugung eines vorgegebenen Mindestdrucks ausgebildetes Druckreduzierventil vorgesehen, wobei die ersten und weiteren Druckreduzierventile jeder Anhängerseite zur Beaufschlagung des der betreffenden Anhängerseite jeweils zugeordneten pneumatischen Zylinders mit dem jeweils höheren Druck über mindestens ein Oder-Verknüpfungsventil mit dem Zylinder verbunden sind. Dadurch ist auch bei einem geringen Luftdruck in den Luftfedern der vorderen Achse stets eine ausreichende Stabilisierung der Lenkung gewährleistet.

Zweckmäßigerweise sind die pneumatischen Zylinder zum Arretieren der Räder in Geradeausstellung bei Rückwärtsfahrt direkt mit der Druckluftversorgung verbindbar, vorzugsweise über mindestens ein Sperrluftventil. Dadurch wird bei Rückwärtsfahrt ein unkontrolliertes Verschwenken der nachlaufgelenkten Räder um die Radschwenkachsen vermieden, so dass das aus dem Zugfahrzeug und dem Fahrzeuganhänger bestehende Gespann leichter rangiert werden kann.

Besonders vorteilhaft ist, wenn der Radstand mindestens ein Sechstel, gegebenenfalls ein Fünftel und vorzugsweise ein Drittel der Länge des Aufbaus beträgt, und wenn der Radstand vorzugsweise kleiner als zwei Drittel der Länge des Aufbaus ist. Dadurch ergibt sich einerseits ein gutes und stabiles Fahrverhalten des Fahrzeuganhängers und andererseits lässt sich der Fahrzeuganhänger bei Rückwärtsfahrt aber auch auf einfache Weise ähnlich wie ein Anhänger mit Tandemachse rangieren. Aufgrund des Radstands befindet sich ein relativ großer Teil des Gewichts des Fahrzeuganhängers zwischen den Achsen, wodurch die Gefahr eines Aufschaukelns des Fahrzeuganhängers vermieden wird. Durch den relativ großen Radstand wird im Vergleich zu einem entsprechenden Fahrzeuganhänger mit nur einer Achse oder einer Tandemachse ein geringer Überhang und somit eine gute Geländegängigkeit des Anhängers ermöglicht. Schließlich ermöglicht ein derartiger Radstand aber auch ein schönes Design des Fahrzeuganhängers. Vorzugsweise sind die Achsen derart angeordnet, dass eine parallel zu den Achsen mittig zwischen diesen verlaufende vertikale Mittelebene gegenüber der vertikalen Quermittelebene des Fahrzeuganhängers nach hinten versetzt ist. Dabei hat es sich als zweckmäßig erwiesen, wenn der Abstand des vorderen Endes des Aufbaus zur Mittellinie der vorderen Achse und der Radstand jeweils etwa 2/5 der Gesamtlänge des Aufbaus und der Abstand zwischen der Mittellinie der hinteren Achse und dem hinteren Ende des Aufbaus etwa 1/5 der Gesamtlänge des Aufbaus entspricht. Der Abstand der Achse kann größer als 1 m sein, insbesondere größer als 1,10 m und vorzugsweise größer als 1,2 m.

Nachfolgend sind Ausführungsbeispiele der Erfindung anhand der Zeichnung näher erläutert. Es zeigen:
- Fig. 1: Eine Seitenansicht eines nachlaufgelenkten Fahrzeuganhängers,
- Fig. 2: eine Vorderansicht des in Fig. 1 gezeigten Fahrzeuganhängers,
- Fig. 3: eine Unteransicht des in Fig. 1 gezeigten Fahrzeuganhängers,
- Fig. 4: eine dreidimensionale Ansicht des Fahrgestells des in Fig. 1 gezeigten Fahrzeuganhängers,
- Fig. 5: die Vorderachse des in Fig. 1 gezeigten Fahrzeuganhängers,
- Fig.6: eine Ansicht auf die Rückseite des Fahrgestells des in Fig. 1 gezeigten Fahrzeuganhängers,
- Fig. 7: ein lufttechnisches Ersatzschaltbild des Fahrzeuganhängers nach Fig. 1,
- Fig. 8: ein lufttechnisches Ersatzschaltbild einer Einrichtung zur Reduzierung des Luftdrucks in den Luftfedern der Vorderachse bei Rückwärtsfahrt und
- Fig. 9: ein lufttechnisches Ersatzschaltbild einer Stabilisierungsdrucksteuerung.

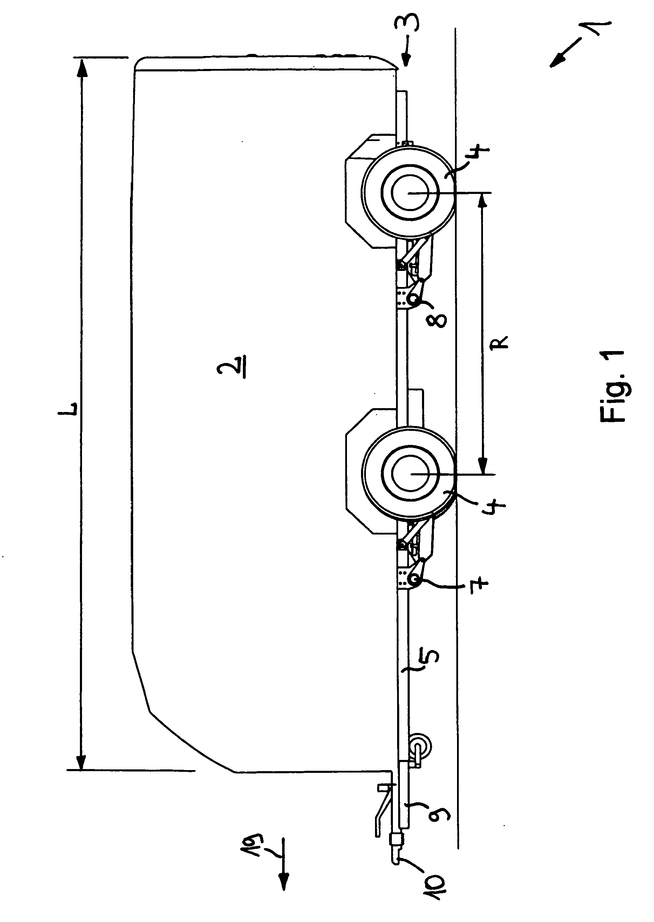

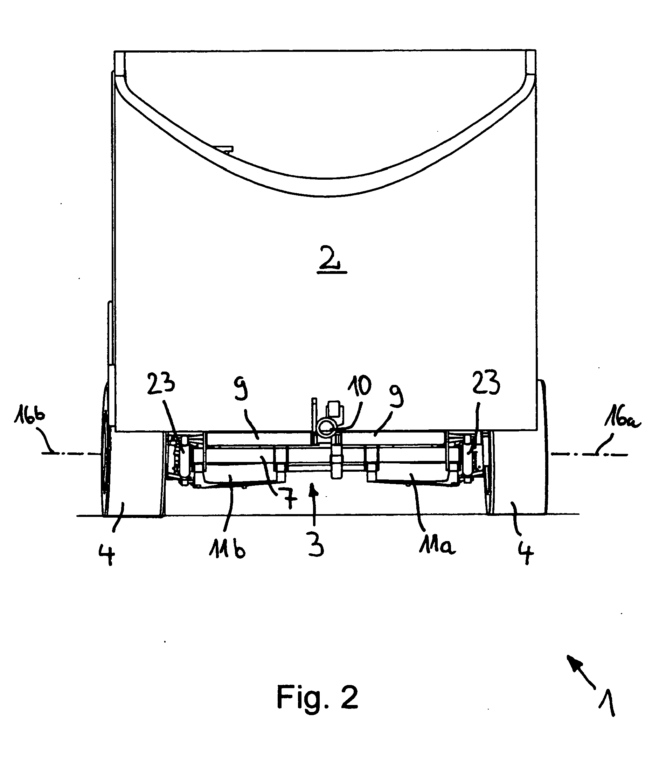

Ein in Fig. 1 und 2 im ganzen mit 1 bezeichneter Fahrzeuganhänger weist einen geschlossenen Aufbau 2 und ein Fahrgestell 3 auf, an dem eine vordere und eine hintere Achse angeordnet sind. Die Räder 4 der Achsen sind über Einzelradaufhängungen mit dem Fahrgestell 3 verbunden.

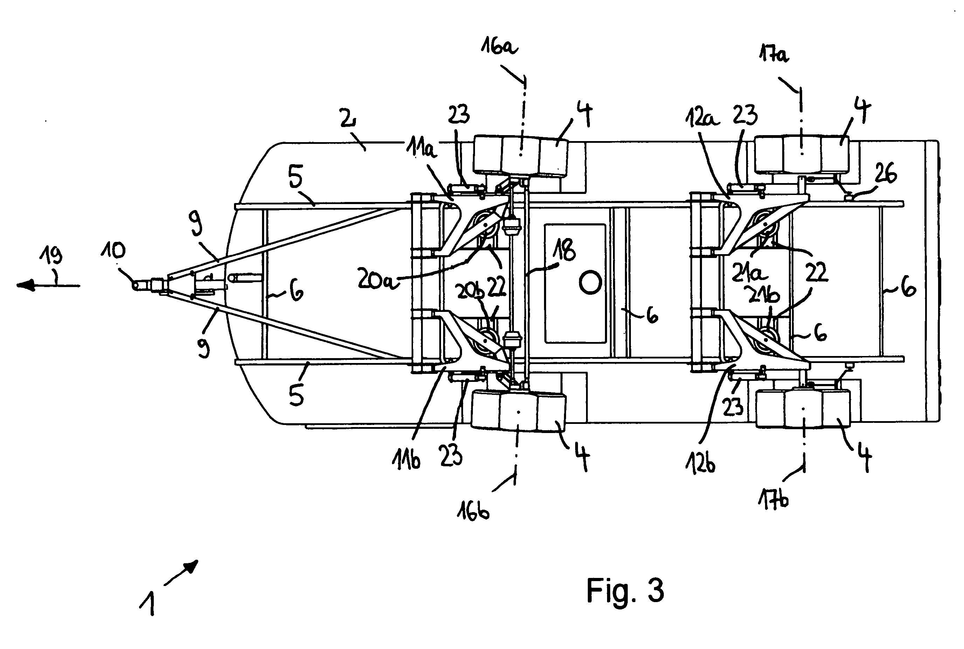

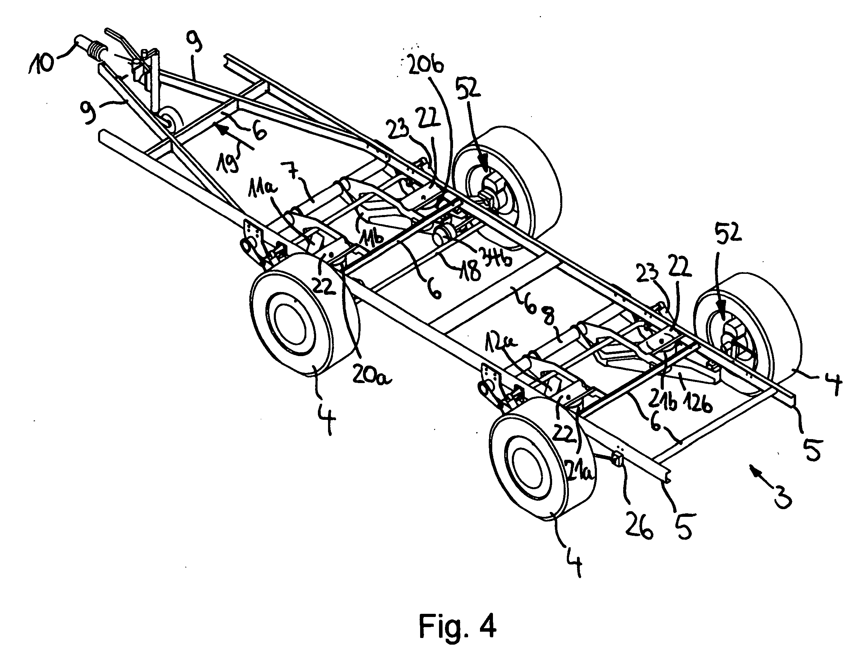

Wie in Fig. 3 und 4 erkennbar ist, weist das Fahrgestell 3 an seiner linken und rechten Seite jeweils einen Längsträger 5 auf, der als U-Profil ausgebildet ist. Zwischen den Längsträgern 5 sind mehrere Querträger 6 angeordnet, welche die Längsträger 5 miteinander verbinden. Die Längsträger 5 sind außerdem an der vorderen und hinteren Achse jeweils über einen Achsträger 7, 8 miteinander verbunden. Die Längsträger 5 erstrecken sich jeweils vom vorderen Ende des Aufbaus 2 durchgängig bis in den Heckbereich des Aufbaus 2.

Mit den Längsträgern 5 ist ferner eine Zugdeichsel 9 verbunden, die als etwa V-förmige Zuggabel ausgebildet ist, die mit den freien Enden ihrer Schenkel fest mit den Längsträgern 5 verbunden ist, beispielsweise über Schweißstellen, Nieten und/oder Schrauben. In Fig. 4 ist erkennbar, dass die freien Enden der Schenkel der Zugdeichsel 9 mit Abstand von den vorderen Enden der Längsträger 6 benachbart zu dem vorderen Achsträger 7 an den einander zugewandten Innenseiten der Längsträger 5 angreifen. An ihrem vorderen Ende trägt die Zugdeichsel 9 eine Kupplungsaufnahme 10 zum Verbinden mit dem Kugelkopf einer PKW-Anhängerkupplung eines in der Zeichnung nicht näher dargestellten Zugfahrzeugs, beispielsweise eines Geländewagens, Zwischen der Zugdeichsel 9 und der Kupplungsaufnahme 10 ist eine Auflaufeinrichtung angeordnet.

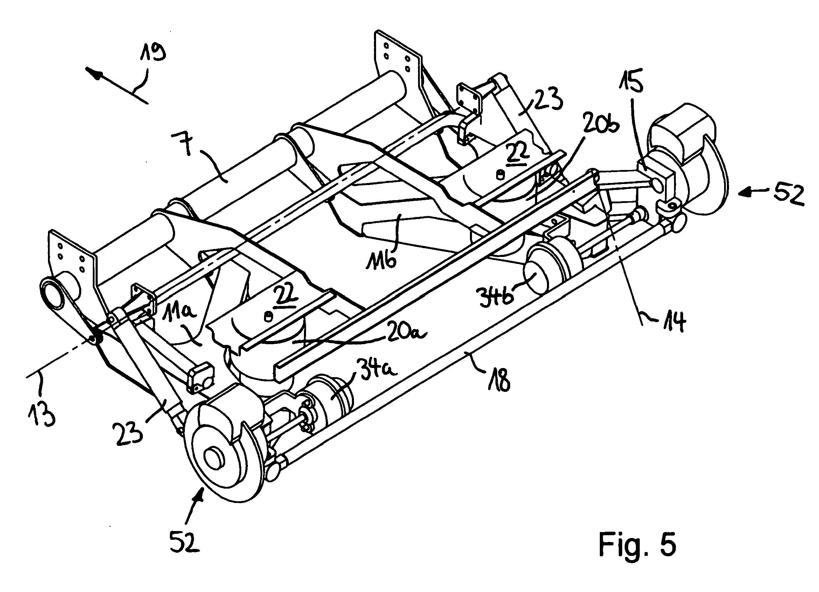

In Fig. 4 und 5 ist erkennbar, dass jede Achse jeweils einen linken Fahrwerkslenker 11a, 12a und einen rechten Fahrwerkslenker 11b, 12b aufweist, die als Längslenker ausgebildet sind. Die Fahrwerkslenker 11a, 11b der vorderen Achse sind jeweils an ihrem vorderen Endbereich über quer zur Längsachse des Fahrzeuganhängers 1 voneinander beabstandete Gummi-Metalllager um eine etwa parallel zur Erstreckungsebene des Fahrgestells 3 verlaufende, quer zur Längsachse des Fahrzeuganhängers 1 orientierte Schwenkachse 13 verschwenkbar mit dem vorderen Achsträger 7 verbunden. In entsprechender Weise sind die Fahrwerkslenker 12a, 12b der hinteren Achse mit dem hinteren Achsträger 8 verschwenkbar verbunden. An ihren hinteren Endbereichen tragen die Fahrwerkslenker 12a, 12b der hinteren Achse in der Zeichnung nicht näher dargestellte Achszapfen, an denen die Räder 4 mittels Radlagern drehbar gelagert sind.

Die Fahrwerkslenker 11a, 11b der vorderen Achse sind an ihren hinteren Endbereichen jeweils um eine Radschwenkachse 14 verschwenkbar mit einem Lenkschenkel 15 verbunden, an dem das Rad 4 um eine Radachse 16a, 16b drehbar gelagert ist. In Fig. 5 ist erkennbar, dass zwischen den Lenkschenkeln 15 eine Spurstange 18 angeordnet ist, die an ihrem einen Ende mit Abstand von der Radschwenkachse 14 des linken Lenkschenkels 15 mit dem linken Lenkschenkel 15 und an ihrem anderen Ende mit Abstand von der Radschwenkachse 14 des rechten Lenkschenkels 15 mit dem rechten Lenkschenkel 15 gelenkig verbunden ist.

Die vordere Achse ist als Nachlauf-Lenkachse ausgebildet, d.h. die Radschwenkachsen 14 sind in der in Fig. 5 durch den Pfeil 19 markierten Vorwärtsfahrtrichtung jeweils derart vor der Radachse 16a, 16b des ihnen zugeordneten Rads 4 beabstandet, dass bei Vorwärtsfahrt auf die Räder 4 ein Drehmoment ausgeübt wird, das versucht, die Räder 4 vorne auseinander- und hinten zusammenzudrücken.

Die Fahrwerkslenker 11a, 11b, 12a, 12b sind jeweils über eine als Balg ausgebildete Luftfeder 20a, 20b, 21a, 21b gegen das Fahrgestell 3 abgestützt. In Fig. 4 und 5 ist erkennbar, dass die Luftfedern 20a, 20b, 21a, 21b jeweils mit ihrem oberen Ende an einer mit den Längsträgern 5 und dem vorderen bzw. hinteren Achsträger 7, 8 verbundenen Lagerplatte 22 und an ihrem unteren Ende an dem ihnen jeweils zugeordneten Fahrwerkslenker 11a, 11b, 12a, 12b angreifen. Dabei sind die Angriffsstellen an den Fahrwerkslenkern 11a, 11b, 12a, 12b jeweils von der Schwenkachse 13 des Fahrwerkslenkers 11a, 11b, 12a, 12b beabstandet. Die Räder 4 sind also über die Luftfedern 20a, 20b, 21a, 21b ein- und ausfederbar mit dem Fahrgestell 3 verbunden.

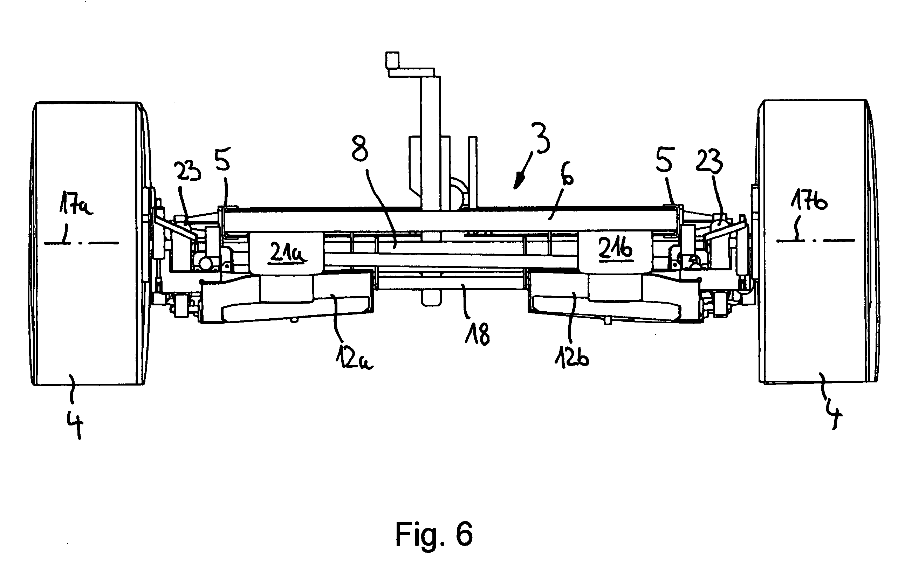

Zum Dämpfen der während der Fahrt auftretenden vertikalen Bewegungen der Räder 4 sind die Fahrwerkslenker 11a, 11b, 12a, 12b jeweils über einen Stoßdämpfer 23 gelenkig mit den Längsträgern 5 des Fahrgestells 3 verbunden. In Fig. 5 und 6 ist erkennbar, dass die Stoßdämpfer 23 jeweils mit Abstand zu der Schwenkachse 13 des ihnen jeweils zugeordneten Fahrwerkslenkers 11a, 11b, 12a, 12b mit ihrem einen Ende an dem Fahrwerkslenker 11a, 11b, 12a, 12b und mit ihrem anderen Ende an dem Längsträger 5 angreifen.

Wie in Fig. 1 besonders gut erkennbar ist, beträgt der Radstand R des Fahrzeuganhängers 1 etwa 2/5 der Gesamtlänge L des Aufbaus 2. In Geradeausstellung der Nachlauflenkung beträgt der Abstand zwischen dem vorderen Ende des Aufbaus 2 und der vorderen Radachse 16a, 16b ebenfalls etwa 2/5 der Gesamtlänge des Aufbaus 2. Der heckseitige Überhang des Aufbaus 2 über die hinteren Radachsen 17b, 17b beträgt somit etwa 1 /5 der Gesamtlänge des Aufbaus 2. Diese Anordnung der Radachsen 16a, 16b, 17a, 17b ermöglicht ein stabiles Fahrverhalten des Fahrzeuganhängers 1. Der Schwerpunkt des Aufbaus 2 bzw. die senkrechte Projektion des Schwerpunkts auf die von den Radachsen 16a, 16b, 17a, 17b aufgespannte Ebene ist zwischen der vorderen und der hinteren Achse des Fahrzeuganhängers 1 angeordnet.

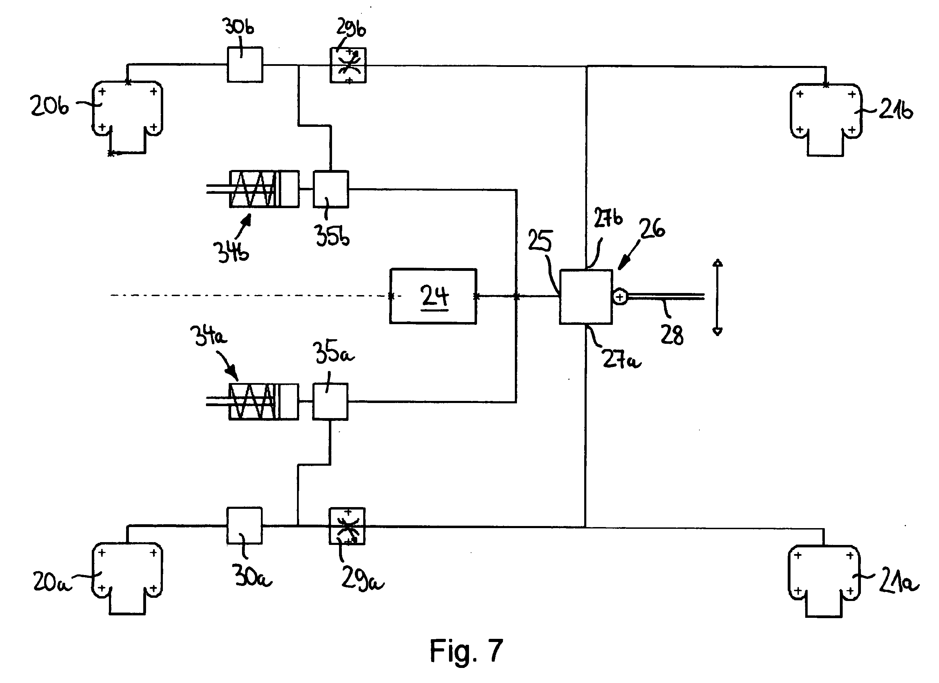

Wie in Fig. 7 erkennbar ist, weist der Fahrzeuganhänger eine Drucklutfiversorgung auf, die einen Druckluftspeicher 24 hat, der mit einer in Fig. 7 nicht näher dargestellten Drucklufftquelle, wie z.B. einem motorangetriebenen Kompressor oder einem Windkessel, verbunden ist. Ein Druckluftanschluss des Druckluftspeichers 24 ist über eine Verbindungsleitung mit einem Eingangsanschluss 25 eines verstellbaren Luftfederventils 26 verbunden. Ausgangsanschlüsse 27a, 27b des Luftfederventils 26 sind mit den Luftfedern 21a, 21b der hinteren Achse und über eine nachstehend näher beschriebene Verstelleinrichtung mit den Luftfedern 20a, 20b der vorderen Achse verbunden. Das Luftfederventil 26 weist ein Stellelement 28 auf, mit dem der Luftdruck an den Ausgangsanschlüssen 27a, 27b des Luftfederventils 2 zur Niveauregelung des Fahrgestells 3 verstellbar ist.

In Fig. 4 ist erkennbar, dass das Luftfederventil 26 benachbart zu der hinteren Achse fest am Fahrgestell 3 angeordnet ist und dass das Stellelement 28 an dem Fahrwerkslenker 12a derart angreift, dass der Luftdruck an den Ausgangsanschlüssen 27a, 27b zunimmt, wenn die Länge der Luftfeder 21a, 21b kleiner ist als ein vorgegebener Sollwert. In entsprechender Weise nimmt der Luftdruck an den Ausgangsanschlüssen 27a, 27b ab, wenn die Länge der Luftfeder 21a, 21b größer ist als der vorgegebene Sollwert. Somit wird an der hinteren Achse im Mittel ein von der Beladung des Fahrzeuganhängers 1 weitgehend unabhängiger, etwa konstanter Abstand zwischen dem Aufbau 2 und dem Erdboden eingehalten.

Zum Einstellen der Stützlast, welche die Zugdeichsel 9 an der Kupplungsaufnahme 10 in Gebrauchsstellung auf die Anhängekupplung des Zugfahrzeugs überträgt, ist der Luftdruck in den Luftfedern 20a, 20b der vorderen Achse mittels einer Luftdruck-Verstellvorrichtung im Verhältnis zu dem Luftdruck in den Luftfedern 21a, 21b der hinteren Achse verstellbar. In Fig. 7 ist erkennbar, dass die Luftdruck-Verstellvorrichtung für jede Luftfeder 20a, 20b der vorderen Achse jeweils ein Druckreduzierventil 29a, 29b aufweist.

Das Druckreduzierventil 29a für die linke Seite der vorderen Achse ist mit seinem einen Anschluss mit dem Ausgangsanschluss 27a des Luftfederventils 26 und mit seinem anderen Anschluss über eine erste Druckreduziereinrichtung 30a zur Druckminderung bei Rückwärtsfahrt mit der linken Luftfeder 20a verbunden. In entsprechender Weise ist das Druckreduzierventil 30b für die rechte Seite der vorderen Achse mit seinem einen Anschluss mit dem Ausgangsanschluss 27b des Luftfederventils 26 und mit seinem anderen Anschluss über eine zweite Druckreduziereinrichtung 30b zur Druckminderung bei Rückwärtsfahrt mit der linken Luftfeder 20b verbunden.

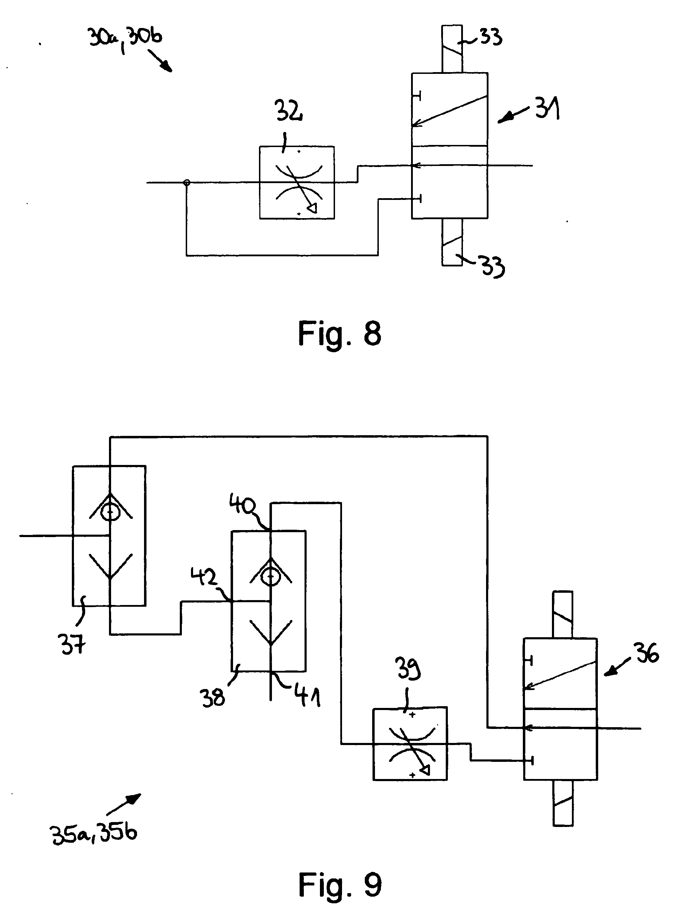

In Fig. 8 ist erkennbar, dass die Druckreduziereinrichtungen 30a, 30b jeweils ein elektromagnetisch betätigbares 3/2-Wegeventil 31 aufweisen, mit dessen Hilfe ein mit dem Ausgang des Druckreduzierventils 29a, 29b verbundener Anschluss wechselweise direkt oder indirekt über ein zweites Druckreduzierventil 32 mit der Luftfeder 20a, 20b verbunden werden kann. Der Ausgangsdruck des Druckreduzierventils 32 ist jeweils kleiner als die Ausgangsdruck des ihm vorgeschalteten Druckreduzierventils 30a, 30b. Das 3/2-Wegeventil 31 weist ein elektromagnetisches Stellglied 33 auf, das in der Zeichnung nicht näher dargestellte elektrische Steueranschlüsse aufweist, die mit einem Rückwärtsgangschalter des Zugfahrzeugs verbindbar sind. Wenn an dem Zugfahrzeug der Rückwärtsgang eingelegt ist, ist jeweils der Ausgang des ersten Druckreduzierventils 29a, 29b mit dem Eingang des ihm zugeordneten zweiten Druckreduzierventils 32 und dessen Ausgang mit der entsprechenden Luftfeder 20a, 20b verbunden. Wenn der Rückwärtsgang nicht eingelegt ist, ist der Ausgang des ersten Druckreduzierventils 29a, 29b unter Umgehung des zweiten Druckreduzierventils 32 jeweils direkt mit der ihm zugeordneten Luftfeder 20a, 20b verbunden.

In Fig. 5 ist erkennbar, dass der Fahrzeuganhänger 1 eine pneumatische Lenkstabilisierungseinrichtung aufweist, die für jeden Lenkschenkel 15 jeweils einen pneumatischen Membranzylinder 34a, 34b aufweist, der mit seinem Gehäuse über eine Halterung jeweils fest mit dem dem betreffenden Lenkschenkel 15 zugeordneten Fahrwerkslenker 11a, 11b verbunden ist und mit seiner Kolbenstange über ein Kugelgelenk an einer von der Radschwenkachse 14 beabstandeten Stelle des Lenkschenkels 15 angreift.

In Fig. 7 ist erkennbar, dass der Membranzylinder 34a für den linken Lenkschenkel 15 über eine erste Stabilisierungsdrucksteuerung 35a einerseits mit dem Druckluftspeicher 24 und andererseits mit dem Ausgang des ersten Druckreduzierventils 29a der linken vorderen Luftfeder 20a verbunden ist. In entsprechender Weise ist der Membranzylinder 34b für den rechten Lenkschenkel 15 über eine zweite Stabilisierungsdrucksteuerung 35b einerseits mit dem Druckluftspeicher 24 und andererseits mit dem Ausgang des ersten Druckreduzierventils 29b der rechten vorderen Luftfeder 20a verbunden. Außerdem ist erkennbar, dass die Membranzylinder 34a, 34b Rückholfedern zum Zurückziehen ihrer Kolbenstangen aufweisen.

In Fig. 9 ist erkennbar, dass die Stabilisierungsdrucksteuerungen 35a, 35b jeweils ein Sperrluftventil 36, zwei Oder-Verknüpfungsventile 37, 38 und ein Druckreduzierventil 39 aufweisen. Das Sperrluftventil 36 hat in der Zeichnung nicht näher dargestellte elektrische Steueranschlüsse, die mit dem Rückwärtsgangschalter des Zugfahrzeugs verbindbar sind. Wenn der Rückwärtsgang eingelegt ist, weist das Sperrluftventil 36 die in Fig. 9 gezeigte erste Schaltstellung auf, bei welcher der dem Sperrluftventil 36 zugeordnete Membranzylinder 34a, 34b zum Sperren der Nachlauflenkung über das Sperrluftventil 36 und das erste Oder-Verknüpfungsventil 37 mit dem vollen pneumatischen Druck des Druckluftspeichers 24 beaufschlagt wird. Die vorderen Räder sind dann bei gesperrter Lenkung in Geradeausstellung angeordnet. Dadurch werden bei Rückwärtsfahrt unkontrollierte Lenkbewegungen der Räder vermieden, so dass sich der Fahrzeuganhänger 1 leichter rangieren lässt. In der in Fig. 9 gezeigten Schaltstellung ist der mit dem zweiten Oder-Verknüpfungsventil 38 verbundene Anschluss des ersten Oder-Verknüpfungsventils 37 gesperrt.

Wenn der Rückwärtsgang des Zugfahrzeugs nicht eingelegt ist, ist das Sperrluftventil 36 in einer zweiten Schaltstellung angeordnet, bei welcher der Druckluftspeicher 24 über das dritte Druckreduzierventil 39 mit einem ersten Anschluss 40 des zweiten Oder-Verknüpfungsventil 38 verbunden ist. Das dritte Druckreduzierventil 39 ist auf einen vorgegebenen Mindestdruck für die Membranzylinder 34a, 34b eingestellt. Ein zweiter Anschluss 41 des zweiten Oder-Verknüpfungsventils 38 ist mit dem Ausgang des ersten Druckreduzierventils 29a, 29b verbunden. Wenn der Ausgangsdruck des ersten Druckreduzierventils 29a, 29b größer ist als der vorgegebene Mindestdruck, liegt an einem dritten Anschluss 42 des zweiten Oder-Verknüpfungsventils 38 der Ausgangsdruck des ersten Druckreduzierventils 29a, 29b an. Wenn der Ausgangsdruck des ersten Druckreduzierventils 29a, 29b dem Mindestdruck entspricht oder kleiner ist als dieser, liegt an dem dritten Anschluss 42 der Mindestdruck an. Der dritte Anschluss 42 des zweiten Oder-Verknüpfungsventils 38 ist in der zweiten Schaltstellung des Sperrluftventils 36 über das erste Oder-Verknüpfungsventil 37 mit der dem Sperrluftventil 36 zugeordneten Luftfeder 20a, 20b verbunden, so dass diese mit dem Ausgangsdruck des zweiten Oder-Verknüpfungsventils 38 beaufschlagt wird.

Erwähnt werden soll noch, dass die vordere und hintere Achse bei dem Ausführungsbeispiel nach Fig. 4 und 5 mit Scheibenbremsaggregaten bestückt ist, die beim Abbremsen des Zugfahrzeugs über die Auflaufeinrichtung hydraulisch betätigt werden. Bei dem Ausführungsbeispiel nach Fig. 14 sind anstelle der Scheibenbremsaggregate Trommelbremsen an den Rädern 4 angeordnet.

## Patentansprüche

1. Fahrzeuganhänger (1), insbesondere für PKW, mit einem Aufbau (2) und einem Fahrgestell (3), wobei an dem Fahrgestell (3) eine vordere und eine hintere Achse angeordnet sind, deren Räder (4) über Fahrwerksfedern ein- und ausfederbar mit dem Fahrgestell (3) verbunden sind, wobei an dem Fahrgestell (3) eine Zugdeichsel (9) fest angeordnet ist, wobei die Fahrwerksfedem mit einer Druckluftversorgung verbundene Luftfedern (20a, 20b, 21a, 21b) sind, und wobei eine Luftdruck-Verstellvorrichtung vorgesehen ist, mittels der zum Einstellen der Stützlast der Zugdeichsel (9) der Luftdruck in den Luftfedern (20a, 20b, 21 a, 21 b) der einzelnen Achsen unterschiedlich einstellbar ist, **dadurch gekennzeichnete, dass** die Räder (4) der vorderen Achse nachlaufgelenkt sind und dass zwischen der Druckluftversorgung und den Luftfedern (20a, 20b) wenigstens einer Achse jeweils ein verstellbares Druckreduzierventil (29a, 29b) angeordnet ist.

2. Fahrzeuganhänger (1) nach Anspruch 1, **dadurch gekennzeichnet, dass** die Druckreduzierventlie (29a, 29b) zwischen den Luftfedern (20a, 20b) der vorderen Achse und der Druckluftversorgung angeordnet sind.

3. Fahrzeuganhänger (1) nach Anspruch 1 oder 2, **dadurch gekennzeichnet, dass** er zur Niveauregulierung des Fahrgestells (3) ein verstellbares Luftfederventil (26) aufweist, das mit einem Eingangsanschluss (25) mit der Drucklutfiversorgung und mit mindestens einem Ausgangsanschluss (27a, 27b) mit den Luftfedern (21a, 21b) der hinteren Achse und über die Druckreduzierventile (29a, 29b) mit den Luftfedern (20a, 20b) der vorderen Achse verbunden ist.

4. Fahrzeuganhänger (1) nach einem der Ansprüche 1 bis 3, **dadurch gekennzeichnet, dass** die Räder (4) der Achsen über Einzelradaufhängungen mit dem Fahrgestell (3) verbunden sind.

5. Fahrzeuganhänger (1) nach einem der Ansprüche 1 bis 4, **dadurch gekennzeichnet, dass** er eine Druckreduziereinrichtung (30a, 30b) zur Reduzierung des Luftdrucks in den Luftfedern (20a, 20b) der vorderen Achse bei Rückwärtsfahrt aufweist, und dass die Druckreduziereinrichtung (30a, 30b) zum automatischen Anpassen des Luftdrucks an die Vorwärts- und/oder Rückwärtsfahrtrichtung ein mit einem Fahrtrichtungsgeber verbundenes Stellglied aufweist.

6. Fahrzeuganhänger (1) nach Anspruch 5, **dadurch gekennzeichnet dass** die Luftfedern (20a, 20b) der vorderen Achse jeweils über eine Reihenschaltung, bestehend aus dem ersten Druckreduzierventil (29a, 29b) und einem zweiten Druckreduzierventil (32) mit der Druckluftversorgung verbunden sind, dass das zweite Druckreduzierventil (32) einen kleineren Ausgangsdruck aufweist als das erste Druckreduzierventil (29a, 29b), und dass die Druckreduziereinrichtung (30a, 30b) eine zu- und abschaltbare Überbrückungseinrichtung für das zweite Druckreduzierventil (32) aufweist.

7. Fahrzeuganhänger (1) nach einem der Ansprüche 1 bis 6, **dadurch gekennzeichnet, dass** die nachlaufgelenkten Räder (4) an Lenkschenkeln (15) angeordnet sind, die um Radschwenkachsen (14) verschwenkbar mit an einem Achsträger (7, 8) angelenkten Fahrwerkslenkern (11a, 11b) verbunden sind, dass die Lenkschenkel (15) durch mindestens eine Spurstange (18) miteinander verbunden sind, und dass eine pneumatische Lenkstabilisierungseinrichtung vorgesehen ist, die derart ausgebildet ist, dass sie die Räder (4) beim Verschwenken aus der Geradeausstellung mit einem Rückstellmoment beaufschlagt.

8. Fahrzeuganhänger (1) nach Anspruch 7, **dadurch gekennzeichnet, dass** die Lenkstabilisierungseinrichtung für das linke und rechte Rad (4) der vorderen Achse jeweils einen pneumatischen Zylinder, insbesondere einen Membranzylinder (34a, 34b) aufweist, der mit seinem einen Ende an dem dem Rad (4) zugeordneten Fahrwerkslenker (11a, 11b) und mit seinem anderen Ende mit Abstand von der Radschwenkachse (14) des Rads (4) an dessen Lenkschenkel (15) angreift.

9. Fahrzeuganhänger (1) nach Anspruch 8, **dadurch gekennzeichnet, dass** die Zylinder für das linke und rechte Rad (4) der vorderen Achse jeweils über das für die betreffende Anhängerseite vorgesehene Druckreduzierventil (29a, 29b) mit der Druckluftversorgung verbunden sind.

10. Fahrzeuganhänger (1) nach Anspruch 8 oder 9, **dadurch gekennzeichnet, dass** für die linke und rechte Anhängerseite zusätzlich zu dem ersten Druckreduzierventil (29a, 29b) mindestens ein weiteres, zur Erzeugung eines vorgegebenen Mindestdrucks ausgebildetes Druckreduzierventil (39) vorgesehen ist, und dass die ersten Druckreduzierventile (29a, 29b) und die weiteren Druckreduzierventile (39) jeder Anhängerseite zur Beaufschlagung des der betreffenden Anhängerseite jeweils zugeordneten pneumatischen Zylinders mit dem jeweils höheren Druck über mindestens ein Oder-Verknüpfungsventil (37, 38) mit dem Zylinder verbunden sind.

11. Fahrzeuganhänger (1) nach einem der Ansprüche 8 bis 10, **dadurch gekennzeichnet, dass** die pneumatischen Zylinder zum Arretieren der Räder (4) in Geradeausstellung bei Rückwärtsfahrt direkt mit der Druckluftversorgung verbindbar sind, vorzugsweise über mindestens ein Sperrluftventil (36).

12. Fahrzeuganhänger (1) nach einem der Ansprüche 1 bis 11, **dadurch gekennzeichnet, dass** sein Radstand (R) mindestens ein Sechstel, gegebenenfalls ein Fünftel und vorzugsweise ein Drittel der Länge (L) des Aufbaus (2) beträgt, und dass der Radstand (R) vorzugsweise kleiner als zwei Drittel der Länge (L) des Aufbaus (2) ist.

## Claims

1. Vehicle trailer (1), in particular for passenger cars, with a body (2) and with a chassis (3), there being arranged on the chassis (3) a front and a rear axle, the wheels (4) of which are connected to the chassis (3) via chassis springs for jounce and rebound, a drawbar (9) being arranged fixedly on the chassis (3), the chassis springs being pneumatic springs (20a, 20b, 21a, 21b) connected to a compressed-air supply, and an air-pressure adjustment device being provided, by means of which, for the purpose of setting the supporting load of the drawbar (9), the air pressure can be set differently in the pneumatic springs (20a, 20b, 21a, 21b) of the individual axles, **characterized in that** the wheels (4) of the front axle are trail-steered, and **in that** in each case an adjustable pressure-reducing valve (29a, 29b) is arranged between the compressed-air supply and the pneumatic springs (20a, 20b) of at least one axle.

2. Vehicle trailer (1) according to Claim 1, **characterized in that** the pressure-reducing valves (29a, 29b) are arranged between the pneumatic springs (20a, 20b) of the front axle and the compressed-air supply.

3. Vehicle trailer (1) according to Claim 1 or 2, **characterized in that** it has, for the leveling of the chassis (3), an adjustable pneumatic-spring valve (26) which is connected by means of an inlet connection (25) to the compressed-air supply and by means of at least one outlet connection (27a, 27b) to the pneumatic springs (21a, 21b) of the rear axle and, via the pressure-reducing valves (29a, 29b), to the pneumatic springs (20a, 20b) of the front axle.

4. Vehicle trailer (1) according to one of Claims 1 to 3, **characterized in that** the wheels (4) of the axles are connected to the chassis (3) via individual wheel suspensions.

5. Vehicle trailer (1) according to one of Claims 1 to 4, **characterized in that** it has a pressure-reducing device (30a, 30b) for reducing the air pressure in the pneumatic springs (20a, 20b) of the front axle during reversing, and **in that** the pressure-reducing device (30a, 30b) has, for automatically adapting the air pressure to the forward and/or reverse travel direction, an actuator which is connected to a travel-direction indicator.

6. Vehicle trailer (1) according to Claim 5, **characterized in that** the pneumatic springs (20a, 20b) of the front axle are connected to the compressed-air supply in each case via a series connection consisting of the first pressure-reducing valve (29a, 29b) and of a second pressure-reducing valve (32), **in that** the second pressure-reducing valve (32) has a lower outlet pressure than the first pressure-reducing valve (29a, 29b), and **in that** the pressure-reducing device (30a, 30b) has a connectable and disconnectable bridging device for the second pressure-reducing valve (32).

7. Vehicle trailer (1) according to one of Claims 1 to 6, **characterized in that** the trail-steered wheels (4) are arranged on steering arms (15) which are connected pivotably about wheel pivot axes (14) to chassis links (11a, 11b) articulated on an axle carrier (7, 8), **in that** the steering arms (15) are connected to one another by means of at least one track rod (18), and **in that** a pneumatic steer stabilization device is provided, which is designed in such a way that it acts with a restoring moment upon the wheels (4) during pivoting out of the straight-ahead position.

8. Vehicle trailer (1) according to Claim 7, **characterized in that** the steer stabilization device for the left and the right wheel (4) of the front axle has in each case a pneumatic cylinder, in particular a diaphragm cylinder (34a, 34b), which engages with its one end on the chassis link (11a, 11b) assigned to the wheel (4) and with its other end, at a distance from the wheel pivot axis (14) of the wheel (4), on the steering arm (15) of the latter.

9. Vehicle trailer (1) according to Claim 8, **characterized in that** the cylinders for the left and the right wheel (4) of the front axle are connected to the compressed-air supply in each case via the pressure-reducing valve (29a, 29b) provided for the respective trailer side.

10. Vehicle trailer (1) according to Claim 8 or 9, **characterized in that,** in addition to the first pressure-reducing valve (29a, 29b), at least one further pressure-reducing valve (39) designed for generating a predetermined minimum pressure is provided for the left and the right trailer side, and **in that**, for acting with the respectively higher pressure upon the pneumatic cylinder assigned in each case to the respective trailer side, the first pressure-reducing valves (29a, 29b) and the further pressure-reducing valves (39) are connected to the cylinder via at least one OR-operation valve (37, 38).

11. Vehicle trailer (1) according to one of Claims 8 to 10, **characterized in that** the pneumatic cylinders are connectable to the compressed-air supply directly, preferably via at least one shut-off air valve (36), for retaining the wheels (4) in the straight-ahead position during reversing.

12. Vehicle trailer (1) according to one of Claims 1 to 11, **characterized in that** its wheel base (R) amounts to at least one sixth, if appropriate to one fifth and preferably to one third of the length (L) of the body (2), and **in that** the wheel base (R) is preferably smaller than two thirds of the length (L) of the body (2).

## Revendications

1. Remorque de véhicule (1), notamment pour véhicules légers, comprenant une carrosserie (2) et un châssis de roulement (3), un essieu avant et un essieu arrière étant disposés sur le châssis de roulement (3), dont les roues (4) sont connectées au châssis de roulement (3) par le biais de ressorts du mécanisme de roulement de manière à pouvoir être suspendues à ressort en traction et compression, un timon de traction (9) étant disposé fixement sur le châssis de roulement (3), les ressorts du mécanisme de roulement étant des ressorts pneumatiques (20a, 20b, 21a, 21b) connectés à une alimentation en air sous pression, et un dispositif de réglage de la pression d'air étant prévu, au moyen duquel, pour l'ajustement de la charge de support du timon de traction (9), la pression d'air dans les ressorts pneumatiques (20a, 20b, 21a, 21b) des essieux individuels peut être ajustée différemment, **caractérisée en ce que** les roues (4) de l'essieu avant sont articulées de manière à suivre la trajectoire et **en ce qu'**entre l'alimentation en air sous pression et les ressorts pneumatiques (20a, 20b) d'au moins un essieu, on dispose à chaque fois un détendeur de pression (29a, 29b) réglable.

2. Remorque de véhicule (1) selon la revendication 1, **caractérisée en ce que** les détendeurs de pression (29a, 29b) sont disposés entre les ressorts pneumatiques (20a, 20b) de l'essieu avant et l'alimentation en air sous pression.

3. Remorque de véhicule (1) selon la revendication 1 ou 2, **caractérisée en ce qu'**elle présente, pour la régulation du niveau du châssis de roulement (3), une soupape de ressort pneumatique (26) réglable, qui est connectée par un raccord d'entrée (25) à l'alimentation en air sous pression et par au moins un raccord de sortie (27a, 27b) aux ressorts pneumatiques (21a, 21b) de l'essieu arrière et par le biais des détendeurs de pression (29a, 29b) aux ressorts pneumatiques (20a, 20b) de l'essieu avant.

4. Remorque de véhicule (1) selon l'une quelconque des revendications 1 à 3, **caractérisée en ce que** les roues (4) des essieux sont connectées par le biais de suspensions individuelles des roues au châssis de roulement (3).

5. Remorque de véhicule (1) selon l'une quelconque des revendications 1 à 4, **caractérisée en ce qu'**elle présente un dispositif de réduction de la pression (30a, 30b) pour réduire la pression d'air dans les ressorts pneumatiques (20a, 20b) de l'essieu avant dans le cas d'une marche arrière, et **en ce que** le dispositif de réduction de la pression (30a, 30b) présente un actionneur connecté à un détecteur du sens de conduite en vue d'une adaptation automatique de la pression d'air au sens de conduite avant et/ou arrière.

6. Remorque de véhicule (1) selon la revendication 5, **caractérisée en ce que** les ressorts pneumatiques (20a, 20b) de l'essieu avant sont connectés à chaque fois par le biais d'un branchement en série, constitué du premier détendeur de pression (29a, 29b) et d'un deuxième détendeur de pression (32), à l'alimentation en air sous pression, **en ce que** le deuxième détendeur de pression (32) présente une pression de sortie inférieure au premier détendeur de pression (29a, 29b) et **en ce que** le dispositif de réduction de la pression (30a, 30b) présente un dispositif de pontage pouvant être connecté et déconnecté pour le deuxième détendeur de pression (32).

7. Remorque de véhicule (1) selon l'une quelconque des revendications 1 à 6, **caractérisée en ce que** les roues (4) articulées de manière à suivre la trajectoire sont disposées sur des fusées de direction (15) qui sont connectées de manière à pouvoir pivoter autour d'axes de pivotement des roues (14) à des bras oscillants du mécanisme de roulement (11a, 11b) articulés à un support d'essieu (7, 8), **en ce que** les fusées de direction (15) sont connectées l'une à l'autre par au moins une barre d'accouplement (18) et **en ce qu'**un dispositif de stabilisation de direction pneumatique est prévu, lequel est réalisé de telle sorte qu'il sollicite les roues (4) avec un couple de rappel lors du pivotement hors de la position rectiligne.

8. Remorque de véhicule (1) selon la revendication 7, **caractérisée en ce que** le dispositif de stabilisation de direction pour la roue gauche et la roue droite (4) de l'essieu avant présente à chaque fois un cylindre pneumatique, notamment un cylindre à membrane (34a, 34b), qui vient en prise avec l'une de ses extrémités avec le bras oscillant du mécanisme de roulement (11a, 11b) associé à la roue (4), et avec son autre extrémité à distance de l'axe de pivotement de roue (14) de la roue (4) avec sa fusée de direction (15).

9. Remorque de véhicule (1) selon la revendication 8, **caractérisée en ce que** les cylindres pour la roue gauche et la roue droite (4) de l'essieu avant sont connectés à l'alimentation en air sous pression à chaque fois par le biais du détendeur de pression (29a, 29b) prévu pour le côté de la remorque concerné.

10. Remorque de véhicule (1) selon la revendication 8 ou 9, **caractérisée en ce que** l'on prévoit pour le côté gauche et le côté droit de la remorque, en plus du premier détendeur de pression (29a, 29b), au moins un détendeur de pression supplémentaire (39) réalisé de manière à produire une pression minimale donnée, et **en ce que** les premiers détendeurs de pression (29a, 29b) et les détendeurs de pression supplémentaires (39) sont connectés de chaque côté de la remorque, pour solliciter le cylindre pneumatique respectivement associé au côté concerné de la remorque ayant la pression respective la plus élevée, par le biais d'au moins une soupape de liaison ou (37, 38), à ce cylindre.

11. Remorque de véhicule (1) selon l'une quelconque des revendications 8 à 10, **caractérisée en ce que** les cylindres pneumatiques pour bloquer les roues (4) dans la position rectiligne en cas de marche arrière, peuvent être directement connectés à l'alimentation en air sous pression, de préférence par le biais d'au moins une soupape d'air d'étanchéité (36).

12. Remorque de véhicule (1) selon l'une quelconque des revendications 1 à 11, **caractérisée en ce que** son support de roue (R) constitue au moins un sixième, éventuellement un cinquième, et de préférence un tiers, de la longueur (L) de la carrosserie (2), et **en ce que** le support de roue (R) est de préférence inférieur à deux tiers de la longueur (L) de la carrosserie (2).
